# EUROPEAN PATENT APPLICATION

(11) **EP 4 617 488 A1**
(43) Date of publication of application: **17.09.2025**
(21) Application number: 24472003.3
(22) Date of filing: 14.03.2024
(51) Int. Cl.: F03B 17/06, F03B 1/04

(54) **FLUID ELECTRIC TURBINE DRIVE MULTIPLIER**

(71) Applicant: Constant Dynamic Systems Ltd., 1404 Sofia (BG)
(72) Inventor: KONSTANTINOV, Dragomir, Sofia (BG)
(74) Representative: Savova, Ekaterina Nikolaeva

(57) **Abstract**

The device can be used as an input attachment for multiplying the drive of all types of electric generators driven by fluid flows, for example air or water turbines, including river, tube or tidal turbines, to improve many times their energy efficiency. It consists of a flow manifold for fluid flow (1) with a streamlined cone (2) and an outer wall (3), forming together an annular nozzle (4). The flow manifold for fluid flow (1) has one or more radial conduits (7), and the annular nozzle (4) is separated from an air or water turbine (6) by an attractor chamber (5).

## Description

### Technical field

The device of the present invention can be used to multiply the drive of various electric generators driven by fluid flows, for example air or water turbines.

### State of art

There are no known analogues of the offered device. Various models of water and wind turbines are known, in which the incoming fluid flow passes through a conduit or channel [1][2][3], in which the incoming and outgoing fluid flow through the conduit or channel are equal to each other. Also known are devices for multiplying an incoming air volume for the purpose of ventilation and air conditioning ("bladeless" fans and others) [4], which consist of a casing with valves, an internal impeller, a toroidal section, a curved slot and an annular nozzle. No such devices are known in which the interior of their annular nozzles contains a streamlined cone with radial conduits. A disadvantage of the existing multiplying devices is their inability to be applied with respect to external fluid flow.

### Technical essence of the invention

It is an object of the present invention to provide a device for multiplying the drive of various electrical generators driven by fluid flows, for example air or water turbines.

The fluid electric turbine drive multiplier is designed for use with an air or water turbine and consists of the following elements:
- flow manifold for fluid flow with a tubular shape with inlet and outlet; the flow manifold for fluid flow is composed of a streamlined cone and an outer wall; the streamlined cone is located in the flow manifold for fluid flow along its length; the outer wall of the flow manifold for fluid flow, together with the streamlined cone forms an annular nozzle at the outlet of the flow manifold for fluid flow;
- the flow manifold for fluid flow has one or more radial conduits which are located transversely in the space between the streamlined cone and the outer wall of the flow manifold for fluid flow; each radial conduit has a streamlined cross-section, such as a lenticular or elliptical cross-section, and each of the radial conduits connects the interior of the streamlined cone to a surrounding water or air pool/reservoir;
- the annular nozzle is separated from the air or water turbine by an attractor chamber;
- the attractor chamber is exposed or connected to the surrounding water or air pool/reservoir;
- in one embodiment, more than one radial conduits form one or more consecutive rings along the flow manifold for fluid flow;
- in another embodiment, the annular nozzle is provided with a controllable aperture.

### Description of figures

**Figure 1** represents a longitudinal section of a device with a single radial conduit.
**Figure 2** represents a longitudinal section of a device with twelve radial conduits and a controllable aperture.

### Implementation examples

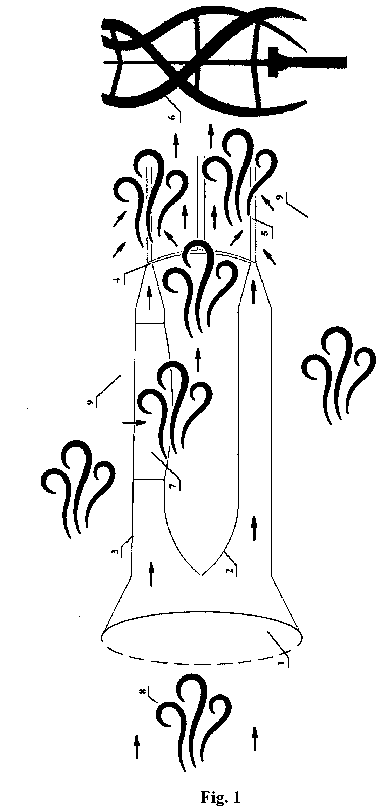

**Figure 1** shows one variant of the device according to the present invention for use with an air turbine (6). The device consists of the following elements:
- flow manifold for fluid flow (1) with a tubular shape with inlet (8) and outlet; the flow manifold for fluid flow (1) is composed of a streamlined cone (2) and an outer wall (3); the streamlined cone (2) is located in the flow manifold for fluid flow (1) along its length; the outer wall (3) of the flow manifold for fluid flow (1), together with the streamlined cone (2) forms an annular nozzle (4) at the outlet of the flow manifold for fluid flow (1);
- the flow manifold for fluid flow (1) has one radial conduit (7) located transversely in the space between the streamlined cone (2) and the outer wall (3) of the flow manifold for fluid flow (1); the radial conduit (7) has an elliptical streamlined cross-section, and connects the interior of the streamlined cone (2) to the surrounding atmosphere (9);
- the annular nozzle (4) is separated by an attractor chamber (5) from air turbine (6), which in this particular case is a wind turbine;
- the attractor chamber (5) is exposed or connected to the surrounding atmosphere (9).

In its operation, the flow manifold (1) receives an external air flow through the air flow inlet (8), which passes between the streamlined cone (2) and the outer wall (3), along the radial conduit (7), and continues through the annular nozzle (4). Thus, the air stream enters the attractor chamber (5) in the form of a ring/cylinder, which causes the fluid effects of "inducement and entrainment", and through them increases the air stream up to 15 times compared to the initial one, at the expense of the additional volume of air entrained from the inner and outer space of the cylinder, according to Bernoulli's principle in an air environment [4]. At the same time, the formed low pressure area inside the streamlined cone (2) is filled by the additional air flow entering through the radial conduit (7) from the surrounding atmosphere (9). The multiplied air jet thus activates the wind turbine (6) with proportionally increased power. The device continues its operation until the external air flow through the air flow inlet (8) is stopped.

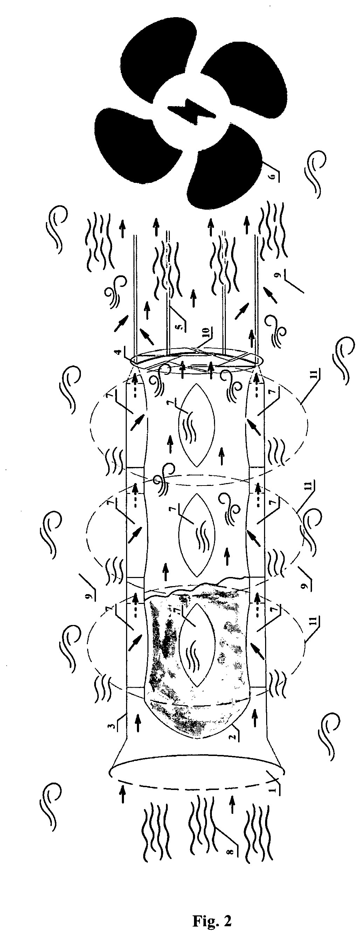

**Figure 2** shows another variant of the device for use with a water turbine (6). The device consists of the following elements: a flow manifold for fluid flow (1) with a streamlined cone (2) and an outer wall (3), which together form an annular nozzle (4); the annular nozzle (4) is separated by an attractor chamber (5) from the water turbine (6); the flow manifold for fluid flow (1) has twelve radial conduits (7) that cross the space between the streamlined cone (2) and the outer wall (3); each radial conduit (7) has a lenticular streamlined section; the flow manifold for fluid flow (1) receives external water flow through the water flow inlet (8); the opening of each radial conduit (7) at the outer wall (3) leads to the surrounding water basin (9), in the specific case a reservoir; the attractor chamber (5) is connected to the surrounding reservoir (9); the twelve radial conduits (7), grouped by four, located at 90 degrees, form three consecutive rings (11) along the flow manifold for fluid flow (1); the annular nozzle (4) is equipped with a controllable aperture (10).

In its operation, the flow manifold for fluid flow (1) takes an external water flow through the fluid flow inlet (8), which passes between the flow cone (2) and the outer wall (3), along the radial conduits (7), and continues through the annular nozzle (4). Thus, the flow enters the attractor chamber (5) in the form of a ring/cylinder, which causes the fluid effects of "inducement and entrainment", and through them increases the water jet more than 15 times compared to the initial one, at the expense of the additional volume of water entrained from the inner and outer space of the cylinder, according to Bernoulli's principle in an aqueous environment [4][5]. At the same time, the controllable aperture (10) allows active management, increasing or decreasing the water jet through the annular nozzle (4), which is a "bottleneck" along the flow. Simultaneously, the low-pressure area formed inside the streamlined cone (2) is filled by the additional water flow entering through the radial conduits (7) from the surrounding reservoir (9), as the greater number of radial conduits (7) grouped in consecutive rings (11), provides an opportunity to fill the larger width of the streamlined cone (2) and along its entire length, and thus lead to a larger multiplied water jet. In doing so, the multiplied water jet activates the water turbine (6) with proportionally increased power. The device continues to operate until the external water flow through the fluid flow inlet (8) is stopped.

### Application of the invention

The device can be used as an input attachment for multiplying the drive of all types of electric generators driven by fluid flows, for example air or water turbines, including river, tube or tidal turbines, to improve many times their energy efficiency.

### List of designations

1. Flow manifold for fluid flow
2. Streamlined cone
3. Outer wall
4. Annular nozzle
5. Attractor chamber
6. Air/water turbine
7. Radial conduits
8. Inlet for air/water flow
9. Air/water pool/reservoir
10. Controllable aperture
11. Ring of radial conduits

### Sources

1. "Schematic diagram of Hydroelectric power plant", Tennessee Valley Authority, 18 August 2000.
2. "Novel INVELOX design with unique intake to improve wind capturing mechanism", Alkhalidi, Ammar et al., December 2022.
3. "Tubular turbines - an overview", Vagnoli, Elena et al., Encyclopedia of energy storage, 2022.
4. "Dyson claims that the output of airflow is increased 15 times more than that taken in through the pedestal's motor". "How does the Dyson Air Multiplier works?", "Jameco Electronics" Inc., 2018
5. "The force caused by Bernoulli's effect is stronger in water compared to atmospheric air, assuming other factors remain equal (such as affected area and flow velocity), due to the following factors:
   - Density: Water is denser than air. The density of water is approximately 1000 kg/m³, while air has a much lower density (around 1.2 kg/m³ at sea level). Bernoulli's principle involves the density of the fluid. Since water is denser, the force due to Bernoulli's effect is stronger.
   - Velocity: When water flows, it can achieve higher velocities than air for the same energy input. Higher velocity means greater kinetic energy, which contributes to the pressure difference according to Bernoulli's principle.
   - Affected Area and Flow Velocity: Assuming the affected area (such as a conduit or wing) and flow velocity are the same, water will exert a stronger force due to its higher density and ability to achieve higher speeds." Microsoft Bing, 2024

## Claims

1. A device for multiplying a fluid electric turbine drive for use with an air or water turbine 6, which consists of a housing and an annular nozzle 4,
**characterized in that**
it consists the following elements:
- the housing is in the form of a flow manifold for fluid flow 1 with a tubular shape with inlet 8 and outlet; the flow manifold for fluid flow 1 is composed of a streamlined cone 2 and an outer wall 3; the streamlined cone 2 is located in the flow manifold for fluid flow 1 along its length; the outer wall 3 of the flow manifold for fluid flow 1, together with the streamlined cone 2 forms an annular nozzle 4 at the outlet of the flow manifold for fluid flow 1;
- the flow manifold for fluid flow 1 has one or more radial conduits 7 which are located transversely in the space between the streamlined cone 2 and the outer wall 3 of the flow manifold for fluid flow 1; each radial conduit 7 has a streamlined cross-section, such as a lenticular or elliptical cross-section, and each of the radial conduits 7 connects the interior of the streamlined cone 2 to a surrounding water or air pool/reservoir 9;
- the annular nozzle 4 is separated from the air or water turbine 6 by an attractor chamber 5;
- the attractor chamber 5 is exposed or connected to the surrounding water or air pool/reservoir 9.

2. A device according to claim 1,
**characterized in that**
- more than one radial conduits 7 form one or more consecutive rings 11 along the flow manifold for fluid flow 1.

3. A device according to claims 1 or 2,
**characterized in that**
- the annular nozzle 4 is provided with a controllable aperture 10.
